# EUROPEAN PATENT APPLICATION

(11) **EP 2 991 021 A1**
(43) Date of publication of application: **02.03.2016**
(21) Application number: 15181838.2
(22) Date of filing: 20.08.2015
(51) Int. Cl.: G06Q 30/02

(54) **METHOD OF DELIVERING AN ADVERTISING MESSAGE**

(30) Priority: 31.08.2014 US 201414474140
(71) Applicant: Shmueli, Kobi, 7316000 Moshav Mazor (IL); Bnaya, Idit, Raanana (IL); Porat, Roy, Tel Aviv (IL)
(72) Inventor: Shmueli, Kobi, 7316000 Moshav Mazor (IL); Bnaya, Idit, Raanana (IL); Porat, Roy, Tel Aviv (IL)
(74) Representative: Gallo, Luca

(57) **Abstract**

A computer implemented method and system for delivering an advertising message to a user is disclosed. A media file containing an advertisement with an advertising message is output to a media playing device, user input responsive to a request for a predetermined user input related to the advertising message is received, and a predetermined action is taken if the received user input matches the predetermined user input, thereby confirming that the user has internalized the advertising message. The predetermined action may include skipping the commercial, crediting the user with rewards, or other predetermined action.

## Description

### FIELD AND BACKGROUND OF THE INVENTION

The present invention relates to a method of delivering an advertising message, through streaming digital media, where a user is offered a reward or incentive for internalizing the advertising message.

An advertising message may be defined as the general idea that an ad will convey to the target audience. Most advertising campaigns are focused on conveying an advertising message to a target audience in order to convince them to purchase a product or service, investigate the brand further, and make the audience remember the brand name. The message can be delivered through various forms of media, including television, radio, print, word of mouth, events, and so on.

Due in large part to the development of Internet technologies, streaming media has become a leading vehicle by which advertisers market themselves to consumers. Various forms of streaming media, including audio and video messages, are frequently used by advertisers to deliver an advertising message contained therein directly to consumers. Very often these streaming media advertisements will be streamed to a user who is already viewing or listening to other streaming content over the Internet at specific points in time during the primary streamed content.

As opposed to traditional radio or television advertisements, streaming media technologies, inherently incorporate two-way communication between the transmitting device and receiving device. As a result, advertisers employing streaming media technologies can receive incoming signals from a user viewing the advertisement. These signals may be used by the advertiser to determine whether the user has internalized the advertising message.

The present invention, therefore, relates to a method of delivering an advertising message to a user where the user is offered an incentive to provide user input which confirms the user has internalized the advertising message.

### SUMMARY OF THE INVENTION

According to the present invention there is provided a computer implemented method of delivering an advertising message to a user including:
a) outputting a media file to a media playing device, the media file containing file data which, when output, provides an audio or video advertising message to a viewer of the media playing device;
b) receiving user input responsive to a request for a predetermined user input, the predetermined user input being related to the advertising message; and
c) taking a predetermined action if the received user input matches the predetermined user input.

In one embodiment the predetermined user input includes one of a text input, a voice input, or an activation of an activateable graphical element.

In one embodiment the action includes one or more of:
i. stopping the outputting of the media file;
ii. skipping to a different location within the media file for the outputting;
iii. altering a display size of the output media file on the media playing device;
iv. altering a display location of the output media file on the media playing device;
v. crediting a user membership account with reward credits;
vi. providing a reward to a person associated with the media playing device.

According to the present invention there is further provided a system for delivering an advertising message to a user including:
a) an output device;
b) an input device;
c) a processor operatively connected to the output device and the input device, wherein the processor is adapted to:
   i) output to the output device a media file containing data representing an advertising message;
   ii) receive at the input device user input responsive to a request for a predetermined user input, the predetermined user input being related to the advertising message; and
   iii) take a predetermined action if the received user input matches the predetermined user input.

In one embodiment the predetermined user input includes one of a text input, a voice input, or an activation of an activateable graphical element.

In one embodiment the action includes one or more of:
i. stopping an output of the media file;
ii. skipping to a different location within the media file and outputting the media file beginning from the different location;
iii. altering a display size of the output media file on the output device;
iv. altering a display location of the output media file on the output device;
v. crediting a user membership account with reward credits;
vi. providing a reward to a person associated with the output device.

According to the present invention there is further provided a method for skipping a commercial playing on a user device including a) associating the commercial with a predetermined input for skipping the commercial, the predetermined input being related to a content of the commercial, and embedding a description of the predetermined input into the commercial; b) streaming the commercial to an output peripheral of the user device; c) capturing user input at an input peripheral of the user device; d) comparing the captured user input with the predetermined user input wherein if a match exists the commercial is skipped.

In one embodiment the predetermined user input is text input. In another embodiment the predetermined user input is voice input. In yet another embodiment the predetermined user input is an activation of an activateable display element.

According to the present invention there is further provided a method for crediting a user with rewards for watching a commercial playing on the user's device including a) associating the commercial with a predetermined input for crediting the user with rewards for watching the commercial, the predetermined input being related to a content of the commercial, and embedding a description of the predetermined input into the commercial; b) streaming the commercial to an output peripheral of the user device; c) capturing user input at an input peripheral of the user device; d) comparing the captured user input with the predetermined user input wherein if a match exists the user is credited with rewards for watching the commercial.

In one embodiment the predetermined user input is text input. In another embodiment the predetermined user input is voice input. In yet another embodiment the predetermined user input is an activation of an activateable display element.

### BRIEF DESCRIPTION OF THE DRAWINGS

Various embodiments are herein described, by way of example only, with reference to the accompanying drawings, wherein:
FIG. 1 is an illustration of an advertisement according to the present invention;
FIG. 2 is a process flow chart illustrating an embodiment of the present invention;
FIG. 3 is a high level system diagram illustrating a system configured according to the present invention;
FIG. 4 is a process flow chart illustrating a first embodiment of the present invention;
FIG. 5 is a process flow chart illustrating a second embodiment of the present invention.

### DESCRIPTION OF THE PREFERRED EMBODIMENTS

The principles and operation of a method for delivering an advertising message according to the present invention may be better understood with reference to the drawings and the accompanying description.

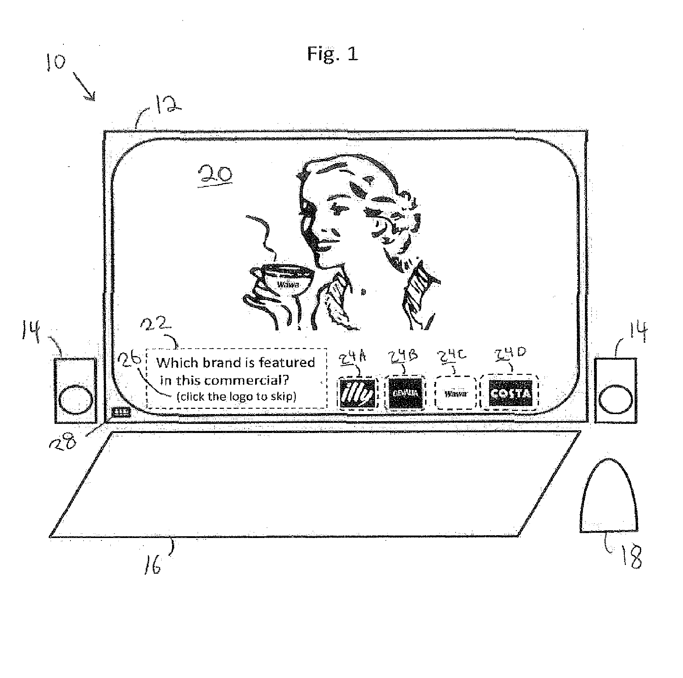

Fig. 1 illustrates an advertisement according to the present invention. "Advertisement" includes any type of informational message including commercials, public service announcements, etc. It will be appreciate by one skilled in the art that Fig. 1 presents merely one example of an advertisement according to the present invention, and that many variations and modifications of the advertisement shown in Fig. 1 are possible within the scope of the present invention. As such, the various elements contained within the advertisement shown in Fig. 1 are not intended to limit the present invention in any way to only the elements shown.

In Fig. 1, a user is provided with an advertisement **20** delivered to a computer **10.** Computer **10** includes output peripherals: display **12** and speakers **14,** and input peripherals: keyboard **16,** mouse **18,** and microphone **28.** In other embodiments, advertisement **20** may be delivered to a television set, a set top box (STB), projector, mobile phone or other suitable device instead of computer **10.**

In Fig. 1, advertisement **20** is a video advertisement. Therefore, the visual component of advertisement **20** is output to display **12** while the audio component is output to speakers **14.** In other embodiments, however, the advertisement may be audio-only in which case the only output would be to speakers **14.** Advertisement **20** in Fig. 1 features a woman enjoying a hot drink from a cup on which is printed the logo representing the Wawa™ coffee company. For the purposes of this example, it is assumed that the underlying advertising message of advertisement **20** is that the viewer should buy Wawa™ coffee. In some embodiments the advertising message may be readily apparent, while in other embodiments the advertising message may be more obscure.

In Fig. 1, advertisement **20** includes an input request **22** and a description of a reward **26** for entering the requested input. Input request **22** identifies a predetermined input which the user must enter to get the reward **26.** Input request **22** may be output visually (such as by outputting a textual instruction to display **12)** or audibly (for example by outputting an audible instruction to speakers **14).** In some embodiments, input request **22** may be displayed on display **12** within the video playing advertisement **20,** for example in the form of overlaid text. In other embodiments, input request **22** may form part of advertisement **20,** for example by appearing on a billboard in the background of advertisement **20.** Input request **22** may also be displayed on a different part of display **12,** for example next to advertisement **20** in the same window, or in a different window altogether. Input request **22** may be output at any predetermined point in time while advertisement **20** is rolling, for example at the very beginning, at the very end, or after a fixed number of seconds into the roll.

In some embodiments, such as that shown in Fig. 1, input request **22** may include one or more activateable graphical elements **24A-24D.** In that case input request **22** may request user input consisting of an activation of only one of activateable graphical elements **24A-24D.** Each of activateable graphical elements **24A-24D** may be activated by clicking on the graphical element with mouse **18** (or by tapping with a finger if viewed on a touchscreen device, or by applying a spatial gesture such as an arm movement, or by using a remote control, or any other method of activating a graphical element etc.). However, only one of activateable graphical elements **24A-24D,** when activated, is responsive to input request **22** and entitles the user to reward **26.** In Fig. 1, only activateable graphical element **24C** is responsive to input request **22.** Activateable graphical elements **24A, 24B** and **24D** are not responsive to input request **22,** and if activated by the user (e.g. by clicking on it) do not entitle the user to reward **26.**

In another embodiment, input request **22** may prompt the user to input text using keyboard **16.** In another embodiment, input request **22** may prompt the user to input voice input using microphone **28.** In these embodiments, it is not necessary to output activateable graphical elements **24A-24D,** since the user input is entered using other means. In these embodiments, the predetermined input should still relate to the advertising message. For example, referring to Fig. 1, in these embodiments input request **22** may prompt "type/speak the brand featured in this commercial in order to skip it". In that case, the predetermined user input which entitles the user to reward **26** is the typed/spoken word "wawa".

In all cases, the predetermined user input which entitles the user to reward **26** should relate to the advertising message, and in addition, should be readily apparent to one who views/listens to advertisement **20,** so that only those users may be expected to correctly enter the requested input other than by chance. That way, by entering the predetermined input, a user effectively confirms for the advertiser that the user has viewed/listened to the advertisement and has internalized the advertising message. Examples of predetermined user input which relate to the advertising message are company name, brand, logo, slogan, featured product, etc.

In some embodiments, such as that shown in Fig. 1, there may visual or audible output describing reward **26.** In other embodiments there may be no need to output a description of reward **26.** For example, the reward may already be known to the user in certain cases.

Reward **26** is any reward or incentive the user receives for entering the predetermined input which is responsive to input request **22.** In some embodiments, such as that shown in Fig. 1, reward **26** is the opportunity to skip the remainder of advertisement **20.** In other embodiments, reward **26** may be points or credits which the user accumulates in an associated user membership account which are awarded for viewing/listening to advertisements. Later, they may be exchanged for value such as cash, trips, merchandise, etc. The purpose of reward **26** is to encourage the user to pay attention to the advertisement, instead of directing his or her attention to something else or surfing away from the advertisement.

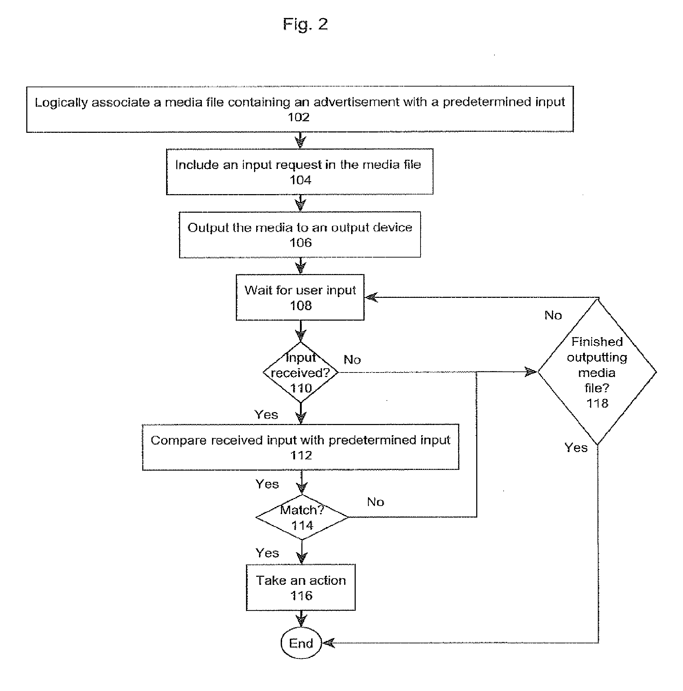

Fig. 2 is a process flow chart illustrating an embodiment of the present invention. It will be appreciated by one skilled in the art that the steps shown in Fig. 2 are performed by a device, or devices, having a processor for processing computer-executable instructions. The steps shown in Fig. 2 may be performed by a single physical device, or may be divided amongst different physical devices in communication with one another.

At block **102** of Fig. 2, an advertisement is, using a computing processor which is operatively connected to a physical memory, logically associated with a predetermined user input. A database is one way of creating this association.

At block **104,** an invitation to enter input such as a user prompt or input request, including a description of the predetermined input, is included in the media file. In one embodiment, the input request is embedded in a visual component of the advertisement. In another embodiment the input request is embedded in an audio component of the advertisement.

At block **106,** the media file is output to an output device such as a computer or television. In one embodiment, the output device is a connected output peripheral. In another embodiment, the output device is a separate physical device connected over a network.

At blocks **108-114,** a continuous loop runs until a termination condition (at blocks **114** or **118)** is satisfied, while user input is waiting to be received and compared with the predetermined user input.

At block **110** if user input is received and execution continues at block **112.** If not, execution continues at block **118** where it is determined if the media file has finished being output. If it has, the process terminates. If it hasn't, execution continues at block **108** to wait for user input.

At block **112,** received user input is compared with the predetermined user input.

At block **114** the result of the comparison made at block **112** is analyzed. If a match exists, the action condition is satisfied and execution continues at block **116** where an action is taken. If no match exists, execution continues at block **118,** and if the media file is still being output, execution continues at block **108** to wait for user input.

In some embodiments, if no match exists at block **114,** an error message may be output. In some embodiments if no match exists, execution may be terminated immediately and the media file output to completion without an opportunity for further user input.

At block **116,** the action condition is satisfied and the desired action is taken. In some embodiments, the action to be taken is any one or more of the following actions:
1. Skipping a portion of the media file by terminating the output or jumping to a predetermined location in the media file to begin outputting;
2. Altering the display size of the outputted media file on the output device, for example reducing the video size on the display of the output device;
3. Altering the display location of the outputted media file, for example by moving the video to a corner of the display of the output device;
4. Crediting a user membership account with reward credits; or
5. Providing a reward to a person associated with the output device.

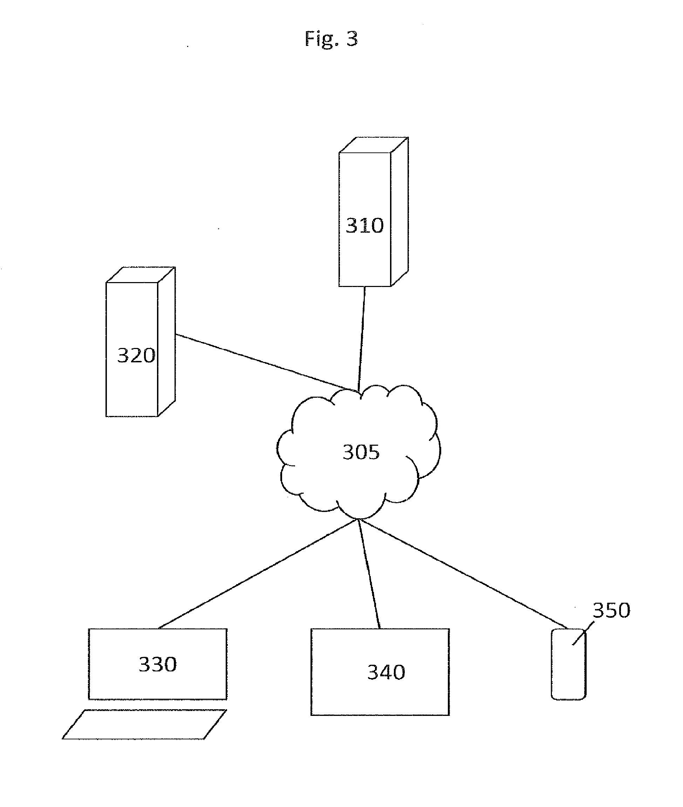

Fig. 3 is a system diagram illustrating an embodiment of a system configured according to the present invention. It will be appreciated by one skilled in the art that the system configuration shown in Fig. 3 is but one example shown for illustrative purposes only, and the many other system configurations are possible within the scope of the present invention.

In Fig. 3, a media server **310** and advertising server **320** communicate with each other and with client devices computer **330,** television **340** and mobile phone **350** over a computer network **305.**

Media server **310** streams movies on demand to client devices **330, 340** and **350.** At fixed locations in each movie being streamed to client devices **330, 340** and **350,** media server retrieves from advertising server **320** and transmits to the respective client devices **330, 340** and **350** a media file which contains: a video advertisement (such as advertisement **20** in Fig. 1), an associated input request (such as input request **22** in Fig. 1), a predetermined graphical element for skipping the advertisement (such as activateable graphical element **24C** in Fig. 1), and several decoy graphical elements (such as activateable graphical elements **24A, 24B** and **24D** in Fig. 1).

Media server **310** also transmits to respective client devices **330, 340** and **350** code for capturing and returning the location of a mouse click (or tap) on the display screen of the device, which executes on the client device while video advertisement is streamed and played.

Code for capturing and returning the location of a mouse click is well known to persons skilled in the art. The following is a sample Javascript code:

```
        var xmlhttp;
        var mouse_x = 0;
        var mouse_y = 0;
        function sts(key) {
           url = 'ajax_gotkey.php?rand=' + Math.random() +
    '&url=' + encodeURIComponent(window.location.href);
           url = url + '&key=' + key;
           url = url + '&mouse_x=' + mouse_x;
           url = url + '&mouse_y=' + mouse_y;
            //For debugging:
            //alert(url);
           xmlhttp=null;
            if (window.XMLHttpRequest) {
               // Code for all new browsers
               xmlhttp=new XMLHttpRequest();
            }
           else if (window.ActiveXObject) {
               // Code for IE5 and IE6
               xmlhttp=new ActiveXObject("Microsoft.XMLHTTP");
            }
            if (xmlhttp!=null) {
               xmlhttp.onreadystatechange=do_change;
               xmlhttp.open("GET",url,true);
               xmlhttp.send(null);
            }
           else {
               alert("Your browser does not support XMLHTTP.");
            }
         }
        function do change() {
            if (xmlhttp.readyState==4) {
               if (xmlhttp.status==200) {
                  //For debugging:
                  //alert(xmlhttp.responseText);
               }
               else {
                  //For debugging:
                  //alert('Problem retrieving XML
    data!<br>Error status code: ' + xmlhttp.status);
               }
               xmlhttp = null;
            }
         }
        function key_pressed(e) {
           e = e ∥ window.event;
            // Let's ignore F5 & ESC just in case...
            if (e.keyCode==116 ∥ e.keyCode==27) return;
            sts(e.keyCode);
         }
        function mouse_moved(e) {
           e = e ∥ window.event;
           mouse_x = e.clientx ∥ e.pageX;
           mouse_y = e.clientY ∥ e.pageY;
         }
        // Add the event listeners:
        document.onkeypress = key_pressed;
        document.onmousemove = mouse_moved;
```

If the location of a mouse click is determined to coincide with the predetermined graphical element, media server **310** interrupts the transmission of the video advertisement and returns to streaming the movie on demand to whichever of client devices **330, 340** or **350** it is applicable. In all other cases, media server **310** continues to transmit the video advertisement until completion, at which point the movie on demand is once again transmitted.

Using the system shown in Fig. 3, a user of client device **330, 340** or **350** has an incentive to watch and internalize the advertising message of the video advertisement being played in order so that the user can skip the advertisement and return to watching the desired movie on demand.

Likewise, in the system of Fig. 3, the advertiser can rest assured that even though the advertisement was skipped, the user internalized the advertising message.

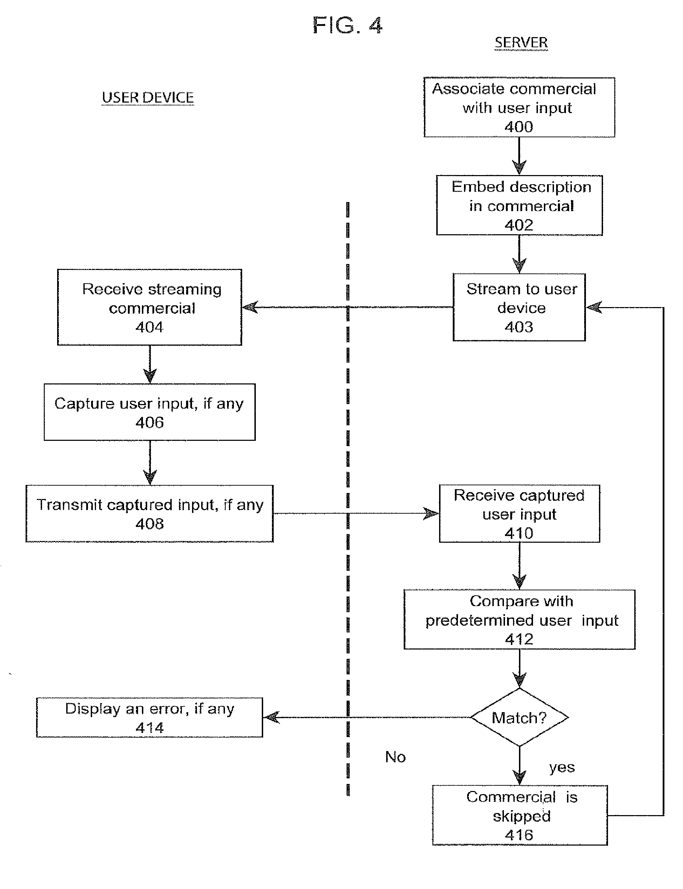

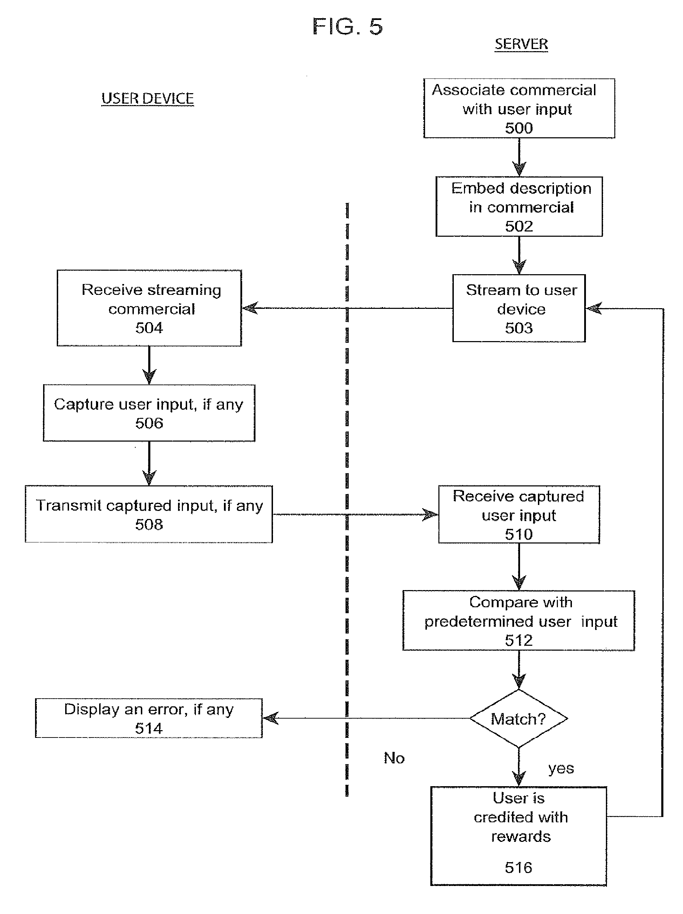

Figs. 4-5 illustrate a first and second embodiment of the method of the present invention in order to skip a commercial playing on a user device (Fig. 4) or credit a user with rewards for watching a commercial playing on a user device (Fig. 5). "User device" includes any device with a processor, memory, output peripheral and input peripheral. Computers, mobile phones and televisions are non-limiting examples of user devices. "Commercial" includes any informational message. In the embodiments shown in Figs. 4-5 the method is executed in part on a server and in part on the user device, though other system topologies are also possible, and therefore Figs. 4-5 are not to be regarded as the only possible topology contemplated as being within the scope of the present invention. Furthermore in the method shown in Figs.4-5 it will be appreciated by one skilled in the art that certain functions shown as being performed on the server may instead be performed on the user device and vice versa.

Referring now to Fig. 4, in a first embodiment of the present invention a method of skipping a commercial is described. In block **400,** a commercial is associated with a predetermined user input for skipping the commercial. The predetermined user input is related to the commercial's content. The predetermined user input can be a typed word, a phrase, a number, a code, etc. The predetermined user input can also be speech input or an activation of an activateable display element which is output to an output peripheral associated with the user device. Each association between a commercial and a predetermined user input is recorded in a machine-readable repository such as a database.

In block **402,** a description of the predetermined user input is embedded into the commercial such that the output of the commercial, a user is provided with a description of the predetermined input which is required to be input to an input peripheral of the user device in order to skip the commercial. In block **403,** the commercial, including the description embedded into the commercial in block **402** is streamed to a user device.

In block **404** the streamed commercial is received at the user device and output to an output peripheral of the user device. In block **406,** user input is captured at the user device. In block **408,** any captured user input is transmitted back to the server for comparing against the predetermined user input which was associated with the commercial at block **400.**

In block **410** the server receives the captured user input from the user device. In block **412** the captured user input is compared with the predetermined user input which was associated with the commercial in block **400.** If a match exists, the flow continues to block **416** where the commercial is skipped. On the other hand, if the results of the comparison made in block **412** results in a mismatch, the commercial is not skipped. In this case flow may continue to block **414** where an error message is output to the user device. In addition or in the alternative to outputting an error message, flow execution may loop back to block **406** to capture any additional user input and transmit same for further comparison. In this embodiment the process ends at the earlier of an occurrence of a match or the commercial having reached the end.

Referring now to Fig. 5, in a second embodiment of the present invention a method of crediting a user with rewards for watching a commercial is described. In block **500,** a commercial is associated with a predetermined user input for crediting a user with rewards for watching the commercial. The predetermined user input is related to the commercial's content. The predetermined user input can be a typed word, a phrase, a number, a code, etc. The predetermined user input can also be speech input or an activation of an activateable display element which is output to an output peripheral associated with the user device. Each association between a commercial and a predetermined user input is recorded in a machine-readable repository such as a database.

In block **502,** a description of the predetermined user input is embedded into the commercial such that the output of the commercial, a user is provided with a description of the predetermined input which is required to be input to an input peripheral of the user device in order to credit the user with rewards. In block **503,** the commercial, including the description embedded into the commercial in block **502** is streamed to a user device.

In block **504** the streamed commercial is received at the user device and output to an output peripheral of the user device. In block **506,** user input is captured at the user device. In block **508,** any captured user input is transmitted back to the server for comparing against the predetermined user input which was associated with the commercial at block **500.**

In block **510** the server receives the captured user input from the user device. In block **512** the captured user input is compared with the predetermined user input which was associated with the commercial in block **500.** If a match exists, the flow continues to block **516** where the user is credited with rewards, for example by crediting a user account associated with the user with reward credits. On the other hand, if the results of the comparison made in block **512** results in a mismatch, the user is not credited with rewards. In this case flow may continue to block **514** where an error message is output to the user device. In addition or in the alternative to outputting an error message, flow execution may loop back to block **506** to capture any additional user input and transmit same for further comparison. In this embodiment the process ends at the earlier of an occurrence of a match or the commercial having reached the end.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A computer implemented method of delivering an advertising message to a user comprising:
a) outputting a media file to a media playing device, said media file containing file data which, when output, provides an audio or video advertising message to a viewer of said media playing device;
b) receiving user input responsive to a request for a predetermined user input, said predetermined user input being related to said advertising message; and
c) taking a predetermined action if said received user input matches said predetermined user input.

2. The method of claim 1 wherein said predetermined user input includes one of a text input, a voice input, or an activation of an activateable graphical element.

3. The method of claim 1 wherein said action includes one or more of:
i. terminating said outputting of said media file;
ii. skipping to a subsequent location within said media file and outputting said media file from said subsequent location;
iii. altering a display size of said output media file on said media playing device;
iv. altering a display location of said output media file on said media playing device;
v. crediting a user membership account with reward credits;
vi. providing a reward to a person associated with said media playing device.

4. A system for delivering an advertising message to a user comprising:
a) an output device;
b) an input device;
c) a processor operatively connected to said output device and said input device, wherein said processor is adapted to:
i) output to said output device a media file containing data representing an advertising message;
ii) receiving at said input device user input responsive to a request for a predetermined user input, said predetermined user input being related to said advertising message; and
iii) take a predetermined action if said received user input matches said predetermined user input.

5. The system of claim 4 wherein said predetermined user input includes one of a text input, a voice input, or an activation of an activateable graphical element.

6. The system of claim 4 wherein said action includes one or more of:
i. terminating an output of said media file;
ii. skipping to a subsequent location within said media file and outputting said media file from said subsequent location;
iii. altering a display size of said output media file on said output device;
iv. altering a display location of said output media file on said output device;
v. crediting a user membership account with reward credits;
vi. providing a reward to a person associated with said output device.

7. A computer implemented method for delivering a commercial to be played on a user device comprising:
a) associating the commercial with a predetermined input for skipping the commercial, said predetermined input being related to a content of the commercial, and embedding a description of said predetermined input into the commercial;
b) streaming the commercial to an output peripheral of the user device;
c) capturing user input at an input peripheral of the user device;
d) comparing said captured user input with said predetermined user input
wherein if a match exists at least one of the following actions is taken:
i) the commercial is skipped;
ii) the user is credited with rewards for watching the commercial.

8. The method of claim 7 wherein the predetermined user input is text input.

9. The method of claim 7 wherein the predetermined user input is voice input.

10. The method of claim 7 wherein the predetermined user input is an activation of an activateable display element.
